Europäisches Patentamt

(19) European Patent Office (11) Publication number: **0 223 596**
Office européen des brevets **B1**

(12) **EUROPEAN PATENT SPECIFICATION**

(45) Date of publication of the patent specification:
02.05.90

(51) Int. Cl.⁴: **B01J 39/00**

(21) Application number: **86309001.5**

(22) Date of filing: **18.11.86**

(54) **Hydration of sulfonated cation exchange resins.**

(30) Priority: **18.11.85 GB 8528311**

(43) Date of publication of application:
**27.05.87 Bulletin 87/22**

(45) Publication of the grant of the patent:
**02.05.90 Bulletin 90/18**

(84) Designated Contracting States:
**AT BE CH DE FR GB IT LI NL SE**

(56) References cited:
**IN-A- 98 155**

**CHEMICAL ABSTRACTS, vol. 85, 1976, page 178,
abstract no. 126681w, Columbus, Ohio, US; &
CS-A-159 867 (J. NEMECEK et al.) 15-09-1975**

**The file contains technical information submitted after
the application was filed and not included in this
specification**

(73) Proprietor: **ROHM AND HAAS COMPANY, Independence
Mall West, Philadelphia Pennsylvania 19105(US)**

(72) Inventor: **Sivieri, Franco, Via Degli Orti 18,
I-24043 Caravaggio (BG)(IT)**

(74) Representative: **Angell, David Whilton et al, ROHM AND
HAAS (UK) LTD. European Operations Patent
Department Lennig House 2 Mason's Avenue, Croydon
CR9 3NB(GB)**

## Description

This invention is concerned with the hydration of sulfonated cation exchange resin beads and allows the amount of waste sulfuric acid and the strain induced by thermal shock in the manufacture of the resin beads to be reduced as compared with known hydration processes.

Generally, sulfonated cation exchange resin beads are made by a batch-type process in which unfunctionalized matrix resin is mixed with concentrated sulfuric acid, typically sulfuric acid having a concentration of 90% or higher, the mixing optionally being carried out in the presence of a swelling agent for the resin, for example, methylene chloride or ethylene dichloride. The residual unused sulfuric acid has, in the past, been removed from the sulfonated cation exchange resin by a process, known as hydration, which involves washing the sulfonated resin/sulfuric acid mixture obtained from the sulfonation reaction, with successive large amounts of water with stirring. More recently, the washing with water has been replaced by washing, with stirring, with successive large amounts of sulfuric acid of decreasing concentration and finally with a large amount of water. These known hydration processes suffer from the disadvantages that the mixing together of large amounts of sulfuric acid of differing concentrations, or the mixing together of large amounts of sulfuric acid and water, produces a large quantity of sulfuric acid in the form of dilute aqueous sulfuric acid which is of no apparent use and must be discharged to waste and also that the addition of dilute aqueous sulfuric acid or water to the residual unused concentrated sulfuric acid generates an exotherm which subjects the resin beads to thermal strain which tends to weaken the beads.

In IN-A 98 155 there is disclosed a process for the hydration of sulfonated vinyl copolymer beads in which a sulfuric acid/sulfonated vinyl copolymer bead mixture is washed with sulfuric acid solutions of decreasing concentration and finally with water, the sulfuric acid solutions and the final water wash being added in a batch-type manner.

We have now found a process which not only enables the amount of waste sulfuric acid to be reduced but also, surprisingly, produces a significant reduction in the weakening of the beads from thermal shock.

According to the present invention there is provided a process for washing sulfonated cation exchange resin beads to remove sulfuric acid therefrom, characterised in that the process comprises passing downwardly through a bed comprising sulfonated cation exchange resin beads and concentrated sulfuric acid adjacent successive discrete amounts of aqueous sulfuric acid of decreasing concentration and finally a discrete amount of water.

The unfunctionalized matrix resin, from which the functionalized (i.e. sulfonated) resin is formed, may, for example, comprise styrene/divinylbenzene copolymer, styrene/divinylbenzene/methylacrylate copolymer or styrene/divinylbenzene/acrylonitrile copolymer. An example of a sulfonated cation exchange resin in the production of which the process of the present invention may be used is Amberlite IR-120 ("Amberlite" is a trademark of Rohm and Haas Company).

The concentrated sulfuric acid may, for example, have a concentration of 90% by weight or higher and the bed comprising sulfonated cation exchange resin and concentrated sulfuric acid may, for example, be the mixture obtained from the process for sulfonating unfunctionalized resin beads.

In one embodiment of the invention, the approximate concentrations, by weight, of the discrete amounts (batches) aqueous sulfuric acid passed downwardly through the bed are 88%, 82%, 60%, 35% and 15%, as such concentrations, when passed through a bed containing sulfuric acid of 90% or higher concentration, yield amounts of effluent sulfuric acid having useful concentrations, e.g. for recycling. However, preferably the successive discrete amounts of aqueous sulfuric acid of decreasing concentration, passed downwardly through the resin bed, comprise at least one discrete amount of aqueous sulfuric acid in each of the following having concentration ranges: 70 to 55% by weight, 40 to 30% by weight, and up to 20% by weight. We have found that an initial aqueous sulfuric acid concentration, by weight, of approximately 60%, followed by aqueous sulfuric acid having concentrations, by weight, of approximately 35% and 15% to be very satisfactory.

Although we do not wish to be bound by theoretical considerations, we believe that the density difference between adjacent batches of aqueous sulfuric acid of different concentrations may cause a "plug flow" as the discrete amounts of aqueous sulfuric acid of decreasing concentration are passed downwardly through the bed. This would mean that mixing at the interface between adjacent discrete amounts of sulfuric acid of differing concentration is not very extensive. This may be further enhanced by careful choice of the flow conditions.

The equilibrium between the aqueous sulfuric acid being passed downwardly through the bed and the sulfonated resin in the bed for the water present in the aqueous sulfuric acid has the effect that a particular discrete amount of aqueous sulfuric acid will generally have a higher sulfuric acid concentration on exiting the bed than on introduction to the bed. A consequence of these factors is that substantially all of the sulfuric acid leaving the bed is of sufficiently high concentration that it can be used for washing of further resin, either in the form of individual fractions of specific, differing sulfuric acid concentration obtained directly (i.e. without mixing of the fractions) from the sulfuric acid leaving the bed, or after mixing two or more such fractions to produce sulfuric acid having a desired concentration. Alternatively, such sulfuric acid can be used in other chemical processes or sold commercially.

As the mixing occurring in the interfacial region between the sulfuric acid of lowest concentration and the water passed through the bed is minimized and it is only the very dilute aqueous sulfuric acid formed by the mixing in this interfacial region that may require discharging to waste, the overall quantity of any sulfuric acid discharged to waste is also minimized. Any such sulfuric acid discharged to waste typically has a sulfuric acid concentration, by weight, of less than 0.5% and typically constitutes lower than 1% by weight of the 100% active ingredient sulfuric acid initial charge.

Apart from the very low quantity of sulfuric acid discharged to waste, the process of the present invention has the following further additional advantages:-

1. The very low quantity of any sulfuric acid for discharge to waste, has the effect that the quantity of neutralizing agent, for example lime or sodium hydroxide, required to neutralize the sulfuric acid before it can be discharged to waste, is also minimized.

2. By careful control of amounts of concentration of the batches of sulfuric acid, the process of the invention requires much lower quantities of aqueous sulfuric acid than the known batch-type hydration processes.

3. The thermal shock experienced by the resin beads during the process of the invention, and hence the likelihood of shattering of the resin beads, is reduced as compared with the known hydration processes.

The volume of each discrete amount of aqueous sulfuric acid passed through the bed comprising the resin may, for example, be from 0.75 to 2.0 l/kg of resin in the bed. The volume of the discrete amount of water passed through the bed comprising the resin may, for example, be from 3 to 4 l/kg of resin in the bed.

The flow rate of each discrete amount of aqueous sulfuric acid and/or the discrete amount of water through the bed comprising the resin is from 2 to 4 l/h/kg resin.

As the latent heat of dilution produced during the process of the invention is kept low, for example by appropriate choice of aqueous sulfuric acid concentrations, the need to provide facilities for cooling the column is avoided. Further, expansion of the resin, which occurs during the process of the invention as a result of its treatment with aqueous sulfuric acid and water, can be readily accommodated by generating a pulse-like low back flow of effluent through the bed of resin.

The temperature of the aqueous sulfuric acid used in the process of the present invention is preferably no greater than 40°C at its point of introduction into the resin bed.

The present invention will now be further illustrated by way of the following Examples which are for illustrative purposes only and are not to be construed as imposing any limitation on the present invention. Examples 1 to 3 illustrate the process of the invention on a laboratory scale and Examples 4 to 8 illustrate the process of the present invention on an industrial scale.

EXAMPLE 1

200 grams of an unfunctionalized matrix resin, which is a styrene/divinyl benzene/methyl acrylate copolymer having a monomer ration by weight of 94:16:1, respectively, was sulfonated with 907 grams of 95.84% by weight sulfuric acid in the presence of ethylene dichloride as swelling agent. The resultant slurry, containing sulfonated cation exchange resin, was transferred to a column and hydrated in accordance with the process of the present invention with 216 grams of 62.4% by weight sulfuric acid, followed sequentially by 184 grams of 36.2% by weight sulfuric acid, 215 grams of 17.2% by weight sulfuric acid, and water until the concentration of sulfuric acid in the effluent from the column was less than 0.2% by weight. The eluant recovered from the base of the column had the composition given in Table I below.

## TABLE I

| Fraction | % H$_2$SO$_4$ | Weight (Grams) |
|----------|---------------|----------------|
| 1 | 87.7 | 709.2 |
| 2 | 84.9 | 88.2 |
| 3 | 78.3 | 83.4 |
| 4 | 69.8 | 80.9 |
| 5 | 61.3 | 75.1 |
| 6 | 43.3 | 65.7 |
| 7 | 10.3 | 52.9 |
| 8 | 2.1 | 50.7 |
| 9 | 1.1 | 51.7 |
| 10 | 0.9 | 50.1 |
| 11 | 0.4 | 40.9 |

None of the fractions recovered from the base of the column had the same concentration as any of the portions of sulfuric acid introduced into the top of the column and this is attributable to the fact that collection of the effluent fractions was out of phase with the introduction of the batches of acid/water into the top of the column.

Effluent from the column was used, as follows, for preparing sulfuric acid either for use in sulfonation of further unfunctionalized matrix resin or for the hydration of further sulfonated cation exchange resin:-

1. 468 Grams of fraction number 1 was mixed with 20% Oleum to give 907 grams of 95.84% by weight sulfuric acid to be used in the sulfonation of further unfunctionalized matrix resin.

2. The remaining portion of fraction 1 (i.e. 241 grams) was combined with fractions Nos. 2 and 3 to give 412 grams of 85.2% by weight sulfuric acid.

3. 62.4% by weight sulfuric acid, for use in the hydration of further sulfonated cation ion exchange resin, was prepared by combining fractions 4 and 5 and 15.4 grams of the sulfuric acid having a concentration of 85.2% by weight (prepared in 2 above) and 45 grams of fraction 6.

4. 36.2% by weight sulfuric acid, for use in the huydration of further sulfonated cation exchange resin, was prepared by combining the remaining portion of fraction 6 with fraction 7, 61.3 grams of the sulfuric acid having a concentration of 85.2% by weight (prepared in 2 above) and 49.2 grams of water.

5. 17.2% by weight sulfuric acid, for use in the hydration of further sulfonated cation ion exchange resin, was prepared by combining fractions 8, 9, 10, with 41 grams of the sulfuric acid having a concentration of 85.2% by weight (prepared in 2 above) and 21.5 grams of water.

## EXAMPLES 2 AND 3

The hydration procedure of Example 1 was repeated except that in Example 2 the concentrations, by weight, of aqueous sulfuric acid passed through the column where 70%, 55%, 40%, 30%, 20% and 10% with the volume ratio of each concentration of sulfuric acid to hydrated resin ranging from 1/8 to 1/2, and in Example 3 the concentrations, by weight, of aqueous sulfuric acid passed through the column where 65% and 25% with the volume ratio of each concentration of sulfuric acid to hydrated resin ranging from 1/8 to 1/2.

## EXAMPLE 4

2,000 Kg of unfunctionalized matrix resin beads, in which the resin is a styrene/divinylbenzene/methyl acrylate copolymer having a monomer ratio, by weight, of 88:12:1, were sulfonated using concentrated sulfuric acid and in the presence of ethylene dichloride and water. The sulfonation was carried out using 8,830 kg of sulfuric acid having a concentration of 98% by weight, and the amount of ethylene dichloride

4

and water added was such that the concentration of the sulfuric acid at the outset of the sulfonation was 96.5% by weight.

After sulfonation of the resin beads, the resultant slurry was transferred to a column and 400 l of sulfuric acid having a concentration of 80% by weight were then eluted through the column for the purpose of washing the apparatus The temperature of the resin beads in the column was then adjusted to 100°C and the beads were then hydrated by passing downwardly through the column the following eluting agents in the following sequence:-

1. 3,200 l of sulfuric acid having a concentration of 61% by weight, at a temperature of 38°C, and at a flow rate of 4,000 l/h;

2. 3,200 l of sulfuric acid having a concentration of 35% by weight, at a temperature of 30°C, and at a flow rate of 4,000 l/h;

3. 3,600 l of sulfuric acid having a concentration of 15% by weight, at a temperature of 36°C, and at a flow rate of 4,000 l/h; and

4. 6,000 l of water at 14°C and at a flow rate of 4,000 l/h.

The rate at which the eluate was removed from the base of the column was such that the resin beads were always immersed in the eluting agent. The concentration profile of the eluate is given below in Table II.

## TABLE II

| Total Eluate Volume (l) | Instantaneous sulfuric acid concentration (% by weight) | Total Eluate Volume (l) | Instantaneous sulfuric acid concentration (% by weight) |
|---|---|---|---|
| 1,000 | 91 | 6,900 | 65.7 |
| 2,000 | 90.3 | 8,000 | 58.2 |
| 4,000 | 87.9 | 9,000 | 48.3 |
| 4,500 | 81.3 | 10,200 | 37.0 |
| 5,000 | 73.6 | 12,000 | 12.9 |
| 6,100 | 67.7 | 13,000 | <1 |

The resulting hydrated resin beads were then analysed for percentage whole beads, percentage perfect beads and osmotic shock stability (% breakdown) and the values obtained were compared with those obtained by hydration of the same sulfonated resin beads by the known batch-type hydration process using decreasing concentrations of sulfuric acid and finally water (as hereinbefore described). The results of this comparison are given below in Table III.

## TABLE III

| Hydration Procedure | % whole beads | % perfect beads | Osmotic shock stability (% breakdown) |
|---|---|---|---|
| Column hydration | 99 | 97 | 5 |
| Known batch-type | 99 | 95 | 7 |

From Table III it can be seen that the resin beads hydrated in accordance with the process of the invention had substantially the same properties as the resin beads hydrated in accordance with the known batch-type hydration but were superior with regard to percentage perfect beads and osmotic shock sta-

bility. It should be noted that the improvement afforded by the invention represents a 40% decrease in imperfect beads and a 29% decrease in beads incapable of resisting osmotic shock.

The eluate from the hydration column was collected in the form of discrete fractions and, by appropriate mixing of these fractions, it was possible to produce sulfuric acid fractions having a concentration and volume suitable for use in the hydration of subsequent amounts of sulfonated resin beads. The initial quantity of eluate leaving the column, having a concentration of greater than 90% by weight, could, by appropriate mixing with 20% oleum, be used to produce sulfuric acid having a concentration suitable for use in the sulfonation of subsequent amounts of unfunctionalized matrix resin beads. Sulfuric acid eluting from the hydration column and having a concentration of 82 to 85% by weight was found to be suitable for sale or, by appropriate mixing with the more concentrated portion of sulfuric acid eluate and subsequent distillation, for use in the sulfonation of subsequent amounts of unfunctionalized matrix resin beads. Thus, none of the sulfuric acid eluting from the hydration column needed to be passed to waste.

EXAMPLE 5

2,000 Kg of unfunctionalized matrix resin beads, in which the resin is a styrene/divinylbenzene/methyl acrylate copolymer having a monomer ratio by weight of 88:12:1, were sulfonated using concentrated sulfuric acid and in the presence of ethylene dichloride and water. The sulfonation was carried out using 8,830 kg of sulfuric acid having a concentration of 98% by weight, and the amount of ethylene dichloride and water added was such that the concentration of the sulfuric acid at the outset of the sulfonation was 96.5% by weight.

After sulfonation of the resin beads, the resultant slurry was transferred to a column and the temperature of the slurry was adjusted to 100°C. The resin beads were then hydrated by passing downwardly through the column the following eluting agents in the following sequence:-

1. 2,000 l of sulfuric acid having a concentration of 61% by weight, at a temperature of 36°C and at a flow rate of 6,000 l/h;
2. 2,000 l of sulfuric acid having a concentration of 36.5% by weight, at a temperature of 35°C and at a flow rate of 6,000 l/h;
3. 2,600 l of sulfuric acid having a concentration of 17% by weight, at a temperature of 37°C and at a flow rate of 6,000 l/h; and
4. 7,500 l of water at a temperature of 14°C and at a flow rate of 6,000 l/h.

The rate at which the eluate was removed from the base of the column was such that the resin beads were always immersed in the eluting agent. The concentration profile of the eluate is given below in Table IV.

## TABLE IV

| Total Eluate Volume (l) | Instantaneous sulfuric acid concentration (% by weight) | Total Eluate Volume (l) | Instantaneous sulfuric acid concentration (% by weight) |
|---|---|---|---|
| 1,900 | 91.3 | 7,500 | 36.2 |
| 3,650 | 86.2 | 8,750 | 20.4 |
| 4,600 | 73.0 | 9,100 | 10.0 |
| 6,000 | 53.7 | 11,000 | <1 |
| 7,000 | 42.0 | | |

As in Example 4, the resulting hydrated resin beads showed the same comparative properties when compared with the hydrated resin beads obtained by hydration of the same sulfonated resin beads by the known batch-type hydration process using decreasing concentrations of sulfuric acid and finally water (as hereinbefore defined). The results of this comparison are given below in Table V.

## Table V

| Hydration Procedure | % whole beads | % perfect beads | Osmotic shock stability (% breakdown) |
|---|---|---|---|
| Column hydration | 99 | 97 | 5 |
| Known batch-type | 99 | 95 | 7 |

Also, it was found that the eluant sulfuric acid could be used in the same manner as in Example 4 (i.e. for sale, to produce sulfuric acid for sulfonation of further unfunctionalized resin, or to produce sulfuric acid for hydration of further sulfonated resin) without the need to discharge any sulfuric acid to waste.

EXAMPLE 6

1,785 Kg of unfunctionaized matrix resin beads, in which the resin is a macroporous styrene/divinylbenzene copolymer having a monomer ratio, by weight, of 70:30, were sulfonated with 9,968 kg of sulfuric acid having a concentration of 98% by weight.

The resultant slurry of sulfonated resin beads was transferred to a column and the temperature of the slurry was adjusted to 110°C. The resin beads were then hydrated by passing downwardly through the column the following eluting agents in the following sequence:-

1. 2,000 l of sulfuric acid having a concentration of 62% by weight, at a temperature of 35°C and at a flow rate of 6,000 l/h;
2. 2,000 l of sulfuric acid having a concentration of 37% by weight, at a temperature of 30°C and at a flow rate of 6,000 l/h;
3. 2,600 l of sulfuric acid having a concentration of 17% by weight, at a temperature of 32°C and at a flow rate of 6,000 l/h; and
4. 8,000 l of water at a temperature of 14°C and at a flow rate of 6,500 l/h.

As in Examples 4 and 5, the eluate was removed from the column at a rate such that the resin beads were always immersed in the eluting agent. The concentration profile of the eluate is given below in Table VI.

## TABLE VI

| Total Eluate Volume (l) | Instantaneous sulfuric acid concentration (% by weight) | Total Eluate Volume (l) | Instantaneous sulfuric acid concentration (% by weight) |
|---|---|---|---|
| 1,900 | 93.5 | 7,500 | 43.4 |
| 3,680 | 92.8 | 8,500 | 31.7 |
| 4,300 | 87.7 | 9,300 | 21.3 |
| 5,000 | 76.9 | 9,800 | 4.0 |
| 6,100 | 61.6 | 11,000 | <1 |
| 6,900 | 50.3 | | |

As in Examples 4 and 5, the resulting hydrated resin beads showed the same comparative properties when compared with the hydrated resin beads obtained by hydration of the same sulfonated resin beads by the known batch-type hydration process using decreasing concentrations of sulfuric acid and finally water (as hereinbefore defined). The results of this comparison are given below in Table VII.

## Table VII

| Hydration Procedure | % whole beads | % perfect beads | Osmotic shock stability (% breakdown) |
|---|---|---|---|
| Column hydration | 99 | 99 | 1 |
| Known batch-type | 99 | 99 | 1 |

Also, it was found that the eluant sulfuric acid could be used in the same manner as in Examples 4 and 5 and without the need to discharge any sulfuric acid to waste.

EXAMPLE 7

2,000 Kg of unfunctionalized matrix resin beads, in which the resin is a styrene/divinylbenzene/methyl acrylate copolymer having a monomer ratio by weight of 85:15:1, were sulfonated with 9,000 kg of concentrated sulfuric acid in the presence of ethylene dichloride as swelling agent. The sulfuric acid, at the outset of the sulfonation had a concentration of 96.5% by weight.

The resultant slurry of sulfonated resin beads was transferred to a column and the temperature of the slurry was adjusted to 110°C. The resin beads were then hydrated by passing downwardly through the column following eluting agents in the following sequence:-

1. 2,000 l of sulfuric acid having a concentration of 63.5% by weight, at a temperature of 20°C and at a flow rate of 5,000 l/h;

2. 2,000 l of sulfuric acid having a concentration of 34.7% by weight, at a temperature of 20°C and at a flow rate of 5,000 l/h;

3. 3,000 l of sulfuric acid having a concentration of 18% by weight, at a temperature of 20°C and at a flow rate of 5,000 l/h; and

4. 7,000 l of water at a temperature of 14°C and at a flow rate of 4,000 l/h.

As in Examples 4 to 6, the eluate was removed from the column at a rate such that the resin beads were always immersed in the eluting agent. The concentration profile of the eluate is given below in Table VIII.

## TABLE VIII

| Total Eluate Volume (l) | Instantaneous sulfuric acid concentration (% by weight) | Total Eluate Volume (l) | Instantaneous sulfuric acid concentration (% by weight) |
|---|---|---|---|
| 1,000 | 91.3 | 6,200 | 53.1 |
| 2,000 | 91.3 | 7,000 | 41.2 |
| 3,500 | 86.7 | 8,200 | 28.0 |
| 4,000 | 82.1 | 8,800 | 23.0 |
| 5,100 | 68.0 | 9,500 | 8.4 |
| 5,500 | 63.3 | 11,000 | <1 |

Again, the resulting hydrated resin beads showed the same comparative properties when compared with the hydrated resin beads obtained by hydration of the same sulfonated resin beads by the known batch-type hydration process using decreasing concentrations of sulfuric acid and finally water (as hereinbefore described). The results of this comparison are given below in Table IX.

## Table IX

| Hydration Procedure | % whole beads | % perfect beads | Osmotic shock stability (% breakdown) |
|---|---|---|---|
| Column hydration | 98 | 96 | 7-8 |
| Known batch-type | 98 | 95 | 9 |

It was also found that the eluant sulfuric acid could be used in the same manner as described in Example 4, thereby removing the need to discharge any sulfuric acid to waste.

### EXAMPLE 8

2,000 Kg of unfunctionalized matrix resin beads, in which the resin is a styrene/divinylbenzene/methyl acrylate copolymer having a monomer ratio, by weight, of 88:12:1, were sulfonated with 9,000 kg of concentrated sulfuric acid in the presence of ethylene dichloride as swelling solvent. The concentration of the sulfuric acid at the outset of the sulfonation was 96.5% by weight.

The resultant slurry of sulfonated resin beads was transferred to a column and the temperature of the slurry was adjusted to 110°C. The resin beads were then hydrated by passing downwardly through the column the following eluting agents in the following sequence:-

1. 3,000 l of sulfuric acid having a concentration of 68% by weight, at a temperature of 40°C and at a flow rate of 6,000 l/h;
2. 3,000 l of sulfuric acid having a concentration of 30% by weight, at a temperature of 40°C and at a flow rate of 6,000 l/h;
3. 4,000 l of water at a temperature of 14°C and at a flow rate of 4,000 l/h; and
4. 4,000 l of water at a temperature of 14°C and at a flow rate of 6,500 l/h.

As in Examples 4 to 7, the eluate was removed from the column at a rate such that the resin beads were always immersed in the eluting agent. The concentration profile of the eluate is given below in Table X.

## TABLE X

| Total Eluate Volume (l) | Instantaneous sulfuric acid concentration (% by weight) | Total Eluate Volume (l) | Instantaneous sulfuric acid concentration (% by weight) |
|---|---|---|---|
| 1,000 | 91.3 | 7,100 | 54.8 |
| 2,000 | 91.2 | 7,750 | 43.5 |
| 3,750 | 86.5 | 8,500 | 33.4 |
| 4,200 | 81.9 | 9,100 | 21.1 |
| 5,100 | 72.7 | 9,400 | 10.0 |
| 5,800 | 68.7 | 10,500 | <1 |
| 6,400 | 64.1 | | |

As in the case of all Examples 4 to 7, the resulting hydrated resin beads showed the same comparative properties when compared with the hydrated resin beads obtained by hydration of the same sulfonated resin beads by the known batch-type hydration process using decreasing concentrations of sulfuric acid and finally water (as hereinbefore described). The results of this comparison are given below in Table XI.

## Table XI

| Hydration Procedure | % whole beads | % perfect beads | Osmotic shock stability (% breakdown) |
|---|---|---|---|
| Column hydration | 99 | 97 | 5 |
| Known batch-type | 99 | 95 | 7 |

Again, it was found that the eluant sulfuric acid could be used in the same manner as in Examples 4 to 7, thereby avoiding the need to discharge sulfuric acid to waste.

**Claims**

1. A process for washing sulfonated cation exchange resin beads to remove sulfuric acid therefrom, characterised in that the process comprises passing downwardly through a bed comprising sulfonated cation exchange resin beads and concentrated sulfuric acid adjacent successive discrete amounts of aqueous sulfuric acid of decreasing concentration and finally a discrete amount of water.

2. A process as claimed in claim 1, in which the concentrated sulfuric acid has a concentration of 90% by weight or higher.

3. A process as claimed in claim 1 or claim 2, in which the sulfonated cation exchange resin beads and concentrated sulfuric acid is the mixture obtained by sulfonating unfunctionalized resin beads.

4. A process as claimed in any preceding claim, in which the sulfonated cation exchange resin is formed by sulfonating matrix resin comprising styrene/divinylbenzene copolymer, styrene/divinylbenzene/methyl acrylate copolymer, or styrene/divinylbenzene/acrylonitrile copolymer.

5. A process as claimed in any preceding claim, in which the successive discrete amounts of aqueous sulfuric acid of decreasing concentration comprise aqueous sulfuric acid having concentrations of from 70 to 60% by weight, 40 to 30% by weight, and up to 20% by weight.

6. A process as claimed in claim 5, in which the successive discrete amounts of aqueous sulfuric acid of decreasing concentration comprise aqueous sulfuric acid having concentrations of approximately 60% by weight, approximately 35% by weight, and approximately 15% by weight.

7. A process as claimed in any preceding claim, in which the volume of each successive discrete amount of aqueous sulfuric acid is from 0.75 l to 2 l/kg of resin being washed.

8. A process as claimed in any preceding claim, in which the flow rate of each successive discrete amount of aqueous sulfuric acid is from 2 to 4 l/h/kg of resin being washed, and/or the flow rate of the discrete amount of water through the bed comprising the resin is from 2 to 4 l/h/kg of resin.

9. A process as claimed in any preceding claim, in which the temperature of each of the discrete amounts of aqueous sulfuric acid is no greater than 40°C at its point of introduction into the bed comprising the resin.

10. A process as claimed in any preceding claim, in which the volume of the discrete amount of water is from 3 to 4 l/kg of resin being washed.

**Patentansprüche**

1. Verfahren zum Waschen von sulfonierten Kationenaustauscherharzkügelchen zur Entfernung von Schwefelsäure, dadurch gekennzeichnet, daß das Verfahren darin besteht, in Abwärtsrichtung durch ein Bett aus sulfonierten Kationenaustauscherharzkügelchen und konzentrierter Schwefelsäure in Berührung damit aufeinanderfolgende diskrete Mengen einer wässrigen Schwefelsäure mit abnehmender Konzentration und abschließend eine diskrete Menge an Wasser zu schicken.

2. Verfahren nach Anspruch 1, wobei die konzentrierte Schwefelsäure eine Konzentration von 90 Gew.-% oder darüber besitzt.

3. Verfahren nach Anspruch 1 oder 2, wobei die sulfonierten Kationenaustauscherharzkügelchen und die konzentrierte Schwefelsäure die Mischung ist, die erhalten wird durch Sulfonierung von nichtfunktionalisierten Harzkügelchen.

4. Verfahren nach einem der vorhergehenden Ansprüche, wobei das sulfonierte Kationenaustauscherharz gebildet wird durch Sulfonierung eines Matrixharzes aus Styrol/Divinylbenzol-Copolymerem, Styrol/Divinylbenzol/Methylacrylat-Copolymerem oder Styrol/Divinylbenzol/Acrylnitril-Copolymerem.

5. Verfahren nach einem der vorhergehenden Ansprüche, wobei die aufeinanderfolgenden diskreten Mengen der wässrigen Schwefelsäure mit abnehmender Konzentration aus wässriger Schwefelsäure mit einer Konzentration von 70 bis 60 Gew.-%, 40 bis 30 Gew.-% und bis zu 20 Gew.-% bestehen.

10

6. Verfahren nach Anspruch 5, wobei die aufeinanderfolgenden diskreten Mengen an wässriger Schwefelsäure mit abnehmender Konzentration aus wässriger Schwefelsäure mit Konzentrationen von ungefähr 60 Gew.-%, ungefähr 35 Gew.-% und ungefähr 15 Gew.-% bestehen.

7. Verfahren nach einem der vorhergehenden Ansprüche, wobei das Volumen einer jeden aufeinanderfolgenden diskreten Menge an wässriger Schwefelsäure 0,75 l bis 2 l/kg des gewaschenen Harzes beträgt.

8. Verfahren nach einem der vorhergehenden Ansprüche, wobei die Fließgeschwindigkeit einer jeden aufeinanderfolgenden diskreten Menge an wässriger Schwefelsäure 2 l bis 4 l/h/kg des gewaschenen Harzes beträgt, und/oder die Fließgeschwindigkeit der diskreten Menge an Wasser durch das Bett aus dem Harz 2 bis 4 l/h/kg des Harzes beträgt.

9. Verfahren nach einem der vorhergehenden Ansprüche, wobei die Temperatur einer jeden der diskreten Mengen an wässriger Schwefelsäure nicht mehr als 40°C am Einführungspunkt in das Bett aus dem Harz beträgt.

10. Verfahren nach einem der vorhergehenden Ansprüche, wobei das Volumen der diskreten Menge an Wasser 3 bis 4 l/kg des gewaschenen Harzes beträgt.

**Revendications**

1. Un procédé pour laver des grains de résine échangeuse de cations sulfonée pour en éliminer l'acide sulfurique, ce procédé étant caractérisé en ce qu'il comprend la descente à travers un lit, comprenant des grains de résine échangeuse de cations sulfonée et de l'acide sulfurique concentré, de quantités séparées successives adjacentes d'acide sulfurique aqueux de concentration décroissante et finalement d'une quantité séparée d'eau.

2. Un procédé selon la revendication 1, dans lequel l'acide sulfurique concentré a une concentration de 90% en poids ou plus.

3. Un procédé selon la revendication 1 ou la revendication 2, dans lequel les grains de résine échangeuse de cations sulfonée et l'acide sulfurique concentré consistent en le mélange obtenu par sulfonation de grains de résine non fonctionnalisée.

4. Un procédé selon l'une quelconque des revendications précédentes, dans lequel la résine échangeuse de cations sulfonée est formée par sulfonation d'une résine de matrice comprenant un copolymère de styrène/divinylbenzène, un copolymère de styrène/divinylbenzène/acrylate de méthyle ou un copolymère de styrène/divinylbenzène/acrylonitrile.

5. Un procédé selon l'une quelconque des revendications précédentes, dans lequel les quantités séparées successives d'acide sulfurique aqueux de concentration décroissante comprennent de l'acide sulfurique aqueux ayant des concentrations de 70 à 60% en poids, de 40 à 30% en poids et d'au maximum 20% en poids.

6. Un procédé selon la revendication 5, dans lequel les quantités séparées successives d'acide sulfurique aqueux de concentrations décroissante comprennent de l'acide sulfurique aqueux ayant des concentrations d'environ 60% en poids, environ 35% en poids et environ 15% en poids.

7. Un procédé selon l'une quelconque des revendications précédentes, dans lequel le volume de chaque quantité séparée successive d'acide sulfurique aqueux est de 0,75 l à 2 l/kg de résine à laver.

8. Un procédé selon l'une quelconque des revendications précédentes, dans lequel le débit de chaque quantité séparée successive d'acide sulfurique aqueux est de 2 l à 4 l/h.kg de résine à laver et/ou le débit de la quantité séparée d'eau à travers le lit comprenant la résine est de 2 à 4 l/h.kg de résine.

9. Un procédé selon l'une quelconque des revendications précédentes, dans lequel la température de chacune des quantités séparées d'acide sulfurique aqueux n'est pas supérieure à 40°C au point d'introduction dans le lit comprenant la résine.

10. Un procédé selon l'une quelconque des revendications précédentes, dans lequel le volume de la quantité séparée d'eau est de 3 à 4 l/kg de résine à laver.